# EUROPEAN PATENT SPECIFICATION

(11) **EP 2 745 957 B1**
(45) Date of publication and mention of the grant of the patent: **26.05.2021**
(21) Application number: 13196470.2
(22) Date of filing: 10.12.2013
(51) Int. Cl.: B22F 5/10, B22F 7/08, F01D 5/18, C22C 1/04, B22F 5/04, B22F 5/00

(54) **Components with near-surface cooling microchannels and methods for providing the same**
Komponenten mit oberflächennahen Kühl-Mikrokanälen und Verfahren dafür
Composants à micro-canaux de refroidissement proche de la surface et procédés de fourniture associés

(30) Priority: 19.12.2012 US 201213719772
(43) Date of publication of application: 25.06.2014
(73) Proprietor: General Electric Company, Schenectady, NY 12345 (US)
(72) Inventor: Schick, David Edward, Greenville, SC 29615 (US); Kottilingam, Srikanth Chandrudu, Greenville, SC 29615 (US); Lacy, Benjamin Paul, Greenville, SC 29615 (US); Harris, John Wesley Jr., Greenville, SC 29615 (US)
(74) Representative: BRP Renaud & Partner mbB Rechtsanwälte Patentanwälte Steuerberater

(56) References cited:
- DE-A1-102007 032 621
- US-A1- 2012 243 995
- US-A1- 2012 308 843

## Description

### BACKGROUND OF THE INVENTION

The subject matter disclosed herein relates to cooling passages for components and, more specifically, to near-surface cooling microchannels and methods for providing the same.

Turbine components, such as buckets (blades), nozzles (vanes), and other hot gas path components of industrial and aircraft gas turbine engines, are typically formed of nickel, cobalt or iron-base superalloys with desirable mechanical and environmental properties for turbine operating temperatures and conditions. Because the efficiency of a turbomachine is dependent on its operating temperatures, there is a demand for components such as turbine buckets and nozzles to be capable of withstanding increasingly higher temperatures. As the maximum local temperature of a superalloy component approaches the melting temperature of the superalloy, forced air cooling becomes necessary. For this reason, airfoils of gas turbine buckets and nozzles often require complex cooling schemes in which air, typically bleed air, is forced through internal cooling passages within the airfoil and then discharged through cooling holes at the airfoil surface to transfer heat from the component. Cooling holes can also be configured so that cooling air serves to film cool the surrounding surface of the component.

Buckets and nozzles formed by casting processes require cores to define the internal cooling passages. The cores and their potential for shifting during the casting process limits the extent to which a conventional casting process can locate a cooling passage in proximity to an exterior surface of the component. As a result, cooling passages are typically about 0.1 inch (about 2.5 millimeters) or more below a base metal surface of a cast turbine bucket or nozzle. However, the heat transfer efficiency could be significantly increased if the cooling passages could be placed closer to the surface than is currently possible. While the cooling passages may potentially be manufactured or machined into the components, the components themselves may be difficult to machine due to their high strength and thoroughness. Moreover, even if channels are machined into the surface of the components, those channels must be covered to form a near-surface cooling microchannel which requires additional labor and resources.

DE 10 2007 032 621 A1 discloses a process for forming cooling microchannels in a pre-sintered preform. US 2012/0308843 discloses a process for forming cooling microchannels in a presintered preform comprising a base material and a braze.

Accordingly, alternative components with near-surface cooling microchannels and methods for providing the same would be welcome in the art.

### BRIEF DESCRIPTION OF THE INVENTION

In one aspect, the invention resides in a method for providing a near-surface cooling microchannel in a component, according to claim 1.

In another aspect, the invention resides in a component including a base article comprising an internal cooling passage having an opening at an outer surface, and a pre-sintered preform having a first surface bonded to the outer surface of the base article, according to claim 11.

These and additional features provided by the embodiments discussed herein will be more fully understood in view of the following detailed description, in conjunction with the drawings.

### BRIEF DESCRIPTION OF THE DRAWINGS

The embodiments set forth in the drawings are illustrative and exemplary in nature and not intended to limit the inventions defined by the claims. The following detailed description of the illustrative embodiments can be understood when read in conjunction with the following drawings, where like structure is indicated with like reference numerals and in which:
FIG. 1 is a perspective view of an exemplary component according to one or more embodiments shown or described herein;
FIG. 2 is an exploded perspective view of a component according to one or more embodiments shown or described herein;
FIG. 3 is a cross-sectional view of a component according to one or more embodiments shown or described herein; and,
FIG. 4 is an exemplary method according to one or more embodiments shown or described herein.

### DETAILED DESCRIPTION OF THE INVENTION

One or more specific embodiments of the present invention will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present invention, the articles "a," "an," "the," and "said" are intended to mean that there are one or more of the elements. The terms "comprising," "including," and "having" are intended to be inclusive and mean that there may be additional elements other than the listed elements.

The present disclosure is generally applicable to components that operate within environments characterized by relatively high temperatures, and particularly a component whose maximum surface temperature approaches the melting temperature of the material from which it is formed, necessitating the use of forced air cooling to reduce the component surface temperature. Notable examples of such components include the high and low pressure turbine buckets (blades), nozzles (vanes), shrouds, and other hot gas path components of a turbine, such as an industrial or aircraft gas turbine engine.

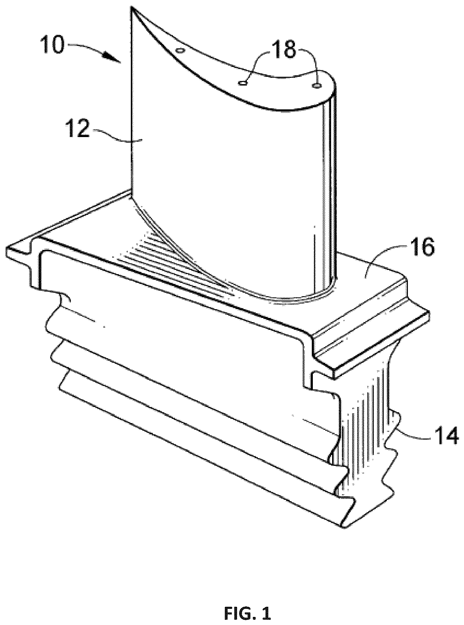

Referring now to FIG. 1, an exemplary component 10 is illustrated comprising a turbine bucket. The component 10 generally includes an airfoil 12 against which hot combustion gases are directed during operation of the gas turbine engine, and whose surface is therefore subjected to very high temperatures. The airfoil 12 is represented as configured to be anchored to a turbine disk (not shown) with a dovetail 14 formed on a root section of the component 10 that is separated from the airfoil 12 by a platform 16. The airfoil 12 includes internal cooling passages 18 (e.g., cooling holes) through which bleed air that enters the component 10 through its root section is forced to transfer heat from the component 10. While the advantages of this invention will be described with reference to the component 10 shown as a bucket in FIG. 1, the teachings of this invention are generally applicable to other hot gas path components of industrial and aircraft gas turbine engines, as well as a variety of other components that are subjected to extreme temperatures.

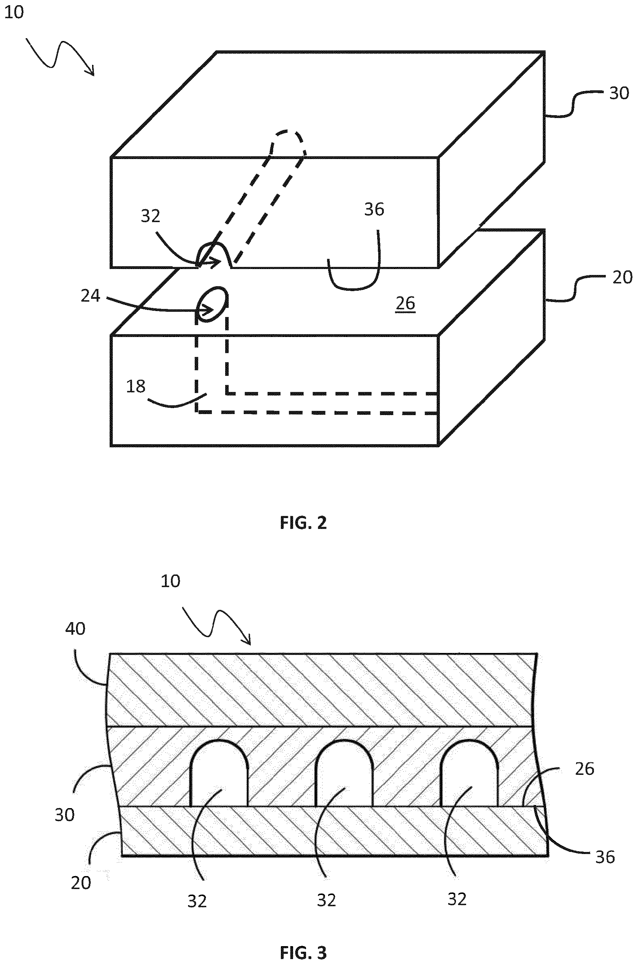

Referring now to FIG. 2, an exploded view of a component 10 is illustrated comprising a base article 20 and a pre-sintered preform 30. The base article 20 generally comprises the internal cooling passage 18 (e.g., cooling hole) that has an opening 24 at an outer surface 26 of the base article 20. In some embodiments, such as that illustrated in FIG. 2, the base article 20 may comprise a single internal cooling passage 18 with a single opening 24 to supply coolant (e.g., cooling air) to the near-surface cooling microchannel 32. In other embodiments, the base article 20 may comprise a plurality of internal cooling passages 18 connecting to either a single opening(s) 24 or a plurality of openings 24. Moreover, the internal cooling passages 18 and the openings 24 can be disposed at any relative locations and comprise any configuration that assists in cooling the base article 20 when in operation. For example, in some embodiments, the internal cooling passage 18 may comprise a serpentine configuration internal the base article 20. In some embodiments, multiple internal cooling passages 18 may be connected to each other in a variety of ways such as a single internal cooling passage 18 with multiple internal cooling passages 18 branching from it.

The base article 20 can comprise a variety of materials such as one or more superalloys. In some embodiments, the base article can comprise a nickel-, cobalt-, or iron-based superalloy. For example, the base article 20 can comprise nickel-based superalloys such as René N4, René N5, René 108, GTD-111®, GTD-222®, GTD-444®, IN-738 and MarM 247 or cobalt-based superalloys such as FSX-414. The base article 20 may be formed as an equiaxed, directionally solidified (DS), or single crystal (SX) casting to withstand the high temperatures and stresses to which it is subjected such as within a gas turbine engine.

Referring to FIGS. 2 and 3, the component 10 further comprises the pre-sintered preform 30. The pre-sintered preform 30 generally comprises a near-surface cooling microchannel 32 in a first surface 36 of the pre-sintered preform 30. The near-surface cooling microchannel 32 comprises any channel that can align with the opening 24 in the outer surface 26 of the base article 20 so that air can flow there between. The near-surface cooling microchannel 32 in the pre-sintered preform 30 will serve as a near-surface cooling microchannel 32 in the component 10 (as best illustrated in FIG. 3) and may therefore have a sufficient cross-sectional area to allow cooling air, such as compressor bleed air when the component 10 comprises a bucket, to flow there through. The near-surface cooling microchannel 32 comprises a width and depth (parallel and normal to the first surface 36, respectively) of up to 0.1 inch (about 2.5 mm), with a typical range of about 0.01 to about 0.05 inch (about 0.25 to about 1.27 mm), though lesser and greater widths and depths are possible. Furthermore, the near-surface cooling microchannel 32 can have a cross-sectional area of up to about 0.01 in² (about 6.5 mm²), for example, about 0.0001 to about 0.0025 inch² (about 0.065 to about 1.6 mm²).

Moreover, the near-surface cooling microchannel 32 can have a variety of cross-sectional shapes and configurations. For example, in some embodiments, such as that illustrated in FIGS. 2 and 3, the near-surface cooling microchannel 32 can comprise a semi-circular tunnel. In other embodiments, the cross-sectional shape of the near-surface cooling microchannel 32 can be rectangular, circular, or any other geometrical or non-geometrical shape or combinations thereof. Furthermore, the near-surface cooling microchannel 32 can comprise a straight passage through the pre-sintered preform 30, or can comprise a multi-directional passage or passages such as a serpentine configuration. In some embodiments, such as that illustrated in FIG. 2, the pre-sintered preform 30 may comprise a single near-surface cooling microchannel 32. In other embodiments, such as that illustrated in FIG. 3, the pre-sintered preform 30 may comprise multiple near-surface cooling microchannels 32. In even other embodiments, multiple near-surface cooling microchannels 32 may be connected to each other in a variety of ways such as a single near-surface cooling microchannel 32 with multiple near-surface cooling microchannels 32 branching from it.

In some embodiments, the near-surface cooling microchannels 32 may be formed through a plurality of other topographical features in the pre-sintered preform 30 such that cooling air can travel in a variety of directions such as when the passage is not a discrete boundary. For example, the near-surface cooling microchannel 32 may not be defined by a single set of walls, but rather defined by the separation in the pre-sintered preform 30 and the base article 20 via one or more topographical variations in the first surface 36 of the pre-sintered preform 30.

Moreover, in some embodiments, such as that illustrated in FIG. 2, the near-surface cooling microchannel 32 may be entirely disposed in the pre-sintered preform 30. However, in some embodiments, the near-surface cooling microchannel 32 may be disposed in both the pre-sintered preform 30 and the base article 20. Specifically, both the first surface 36 of the pre-sintered preform 30 and the outer surface 26 of the base article 20 can comprise contours that, once aligned, combine to form the one or more near-surface cooling microchannels 32. In such embodiments, the contours in the outer surface 26 of the base article 20 may align with the internal cooling passage 18 or be disposed separate from the internal cooling passage 18. In even some embodiments, the near-surface cooling microchannels 32 may transition back-and-forth between the pre-sintered preform 30 and the base article 20.

The near-surface cooling microchannel 32 can further comprise one or more exit holes or trenches to exhaust the flowing air out of the pre-sintered preform 30. The exit holes or trenches may comprise any configuration(s) and location(s) that would otherwise be present if the near-surface cooling microchannel was in the base article 20. For example, these exit holes or trenches can comprise discrete holes or closed trenches that collect cooling air from multiple near-surface cooling microchannels before exhausting through a discrete hole. In some embodiments, one or more near-surface cooling microchannels 32 may direct cooling air into an open trench on an exterior surface of the pre-sintered preform 30.

The pre-sintered preform 30 comprises a mixture of particles comprising a base alloy and a second alloy that have been sintered together at a temperature below their melting points to form an agglomerate and somewhat porous mass. Suitable particle size ranges for the powder particles include 150 mesh, or even 325 mesh or smaller to promote rapid sintering of the particles and minimize porosity in the pre-sintered preform 30 to about 10 volume percent or less. In some embodiments, the density of the pre-sintered preform 30 has a density of 90% or better. In even some embodiments, the pre-sintered preform 30 has a density of 95% or better. As discussed below, the sintered perform shell 120 can be subjected to hot isostatic pressing (HIP) or vacuum/inert atmosphere pressing to promote higher densities.

The base alloy of the pre-sintered preform 30 has a composition similar to the base article 20 to promote common physical properties between the pre-sintered preform 30 and the base article 20. For example, in some embodiments, the base alloy and the base article share a common composition (i.e., they are the same type of material). In some embodiments, the base alloy can comprise nickel-based superalloys such as Rene N4, René N5, René 108, GTD-111®, GTD-222®, GTD-444®, IN-738 and MarM 247 or cobalt-based superalloys such as FSX-414 as discussed above. In some embodiments, the properties for the base alloy include chemical and metallurgical compatibility with the base article 20, such as high fatigue strength, low tendency for cracking, oxidation resistance and/or machinability.

The base alloy comprises a melting point of within about 25°C of the melting temperature of the base article 20. In some embodiments, the base alloy may comprise a compositional range of, by weight, about 2.5 to 11% cobalt, 7 to 9% chromium, 3.5 to 11% tungsten, 4.5 to 8% aluminum, 2.5 to 6% tantalum, 0.02 to 1.2% titanium, 0.1 to 1.8% hafnium, 0.1 to 0.8% molybdenum, 0.01 to 0.17% carbon, up to 0.08% zirconium, up to 0.60 silicon, up to 2.0 rhenium, the balance nickel and incidental impurities. In even some embodiments, the base alloy may comprise a compositional range of, by weight, about 9 to 11% cobalt, 8 to 8.8% chromium, 9.5 to 10.5% tungsten, 5.3 to 5.7% aluminum, 2.8 to 2.3% tantalum, 0.9 to 1.2% titanium, 1.2 to 1.6% hafnium, 0.5 to 0.8% molybdenum, 0.13 to 0.17% carbon, 0.03 to 0.08% zirconium, the balance nickel and incidental impurities. It should be appreciated that while specific materials and compositions have been listed herein for the composition of the base alloy of the pre-sintered preform 30, these listed materials and compositions are exemplary only and non-limiting and other alloys may alternatively or additionally be used. Furthermore, it should be appreciated that the particular composition of the base alloy for the pre-sintered preform 30 may depend on the composition of the base article 20.

As discussed above, the pre-sintered preform 30 further comprises a second alloy. The second alloy also has a composition similar to the base article 20 but further contains a melting point depressant to promote sintering of the base alloy and the second alloy particles and enable bonding of the pre-sintered preform 30 to the base article 20 at temperatures below the melting point of the base article 20. The melting point depressant comprises boron and/or silicon.

In some embodiments, the second alloy may comprise a melting point of about 25°C to about 50°C below the grain growth or incipient melting temperature of the base article 20. Such embodiments may better preserve the desired microstructure of the base article 20 during the heating process. In some embodiments, the second alloy may comprise a compositional range of, by weight, about 9 to 10% cobalt, 11 to 16% chromium, 3 to 4% aluminum, 2.25 to 2.75% tantalum, 1.5 to 3.0% boron, up to 5% silicon, up to 1.0% yttrium, the balance nickel and incidental impurities. For example, in some embodiments the second alloy may comprise commercially available Amdry DF4B nickel brazing alloy. It should also be appreciated that while specific materials and compositions have been listed herein for the composition of the second alloy of the pre-sintered preform 30, these listed materials and compositions are exemplary only and non-limiting and other alloys may alternatively or additionally be used. Furthermore, it should be appreciated that the particular composition of the second alloy for the pre-sintered preform 30 may depend on the composition of the base article 20.

The pre-sintered preform 30 can comprise any relative amounts of the base alloy and the second alloy that are sufficient to provide enough melting point depressant to ensure wetting and bonding (e.g., diffusion/brazing bonding) of the particles of the base alloy and the second alloy to each other and to the outer surface 26 of the base article 20. For example, in some embodiments the second alloy can comprise at least about 10 weight percent of the pre-sintered preform 30. In some embodiments the second alloy can comprise no more than 70 weight percent of the pre-sintered preform 30. Such embodiments may provide a sufficient amount of melting point depressant while limiting potential reduction of the mechanical and environmental properties of the subsequent heating. Furthermore, in these embodiments, the base alloy can comprise the remainder of the pre-sintered preform 30 (e.g., between about 30 weight percent and about 70 weight percent of the pre-sintered preform 30). In even some embodiments, the particles of the base alloy can comprise about 40 weight percent to about 70 weight percent of the pre-sintered preform 30 with the balance of the composition comprising particles of the second alloy. It should be appreciated that while specific relative ranges of the base alloy and the second alloy have been presented herein, these ranges are exemplary only and non-limiting and any other relative compositions may also be realized such that a sufficient amount of melting point depressant is provided as discussed above.

Aside from the particles of the base alloy and the second alloy, no other constituents are required within the pre-sintered preform 30. However, in some embodiments, a binder may be initially blended with the particles of the base alloy and the second alloy to form a cohesive mass that can be more readily shaped prior to sintering. In such embodiments, the binder can include, for example, a binder commercially available under the name NICROBRAZ-S from the Wall Colmonoy Corporation. Other potentially suitable binders include NICROBRAZ 320, VITTA GEL from Vitta Corporation, and others including adhesives commercially available from Cotronics Corporation, all of which may volatilize cleanly during sintering.

The pre-sintered preform 30 may be formed by mixing the powder particles of the base alloy (i.e., base alloy particles) and the second alloy (i.e., second alloy particles) by any suitable means such as stirring, shaking, rotating, folding or the like or combinations thereof. After mixing, the mixture may be combined with the binder (i.e., to form a combined powder mixture) and cast into shapes (i.e., to form a compacted preform), during and/or after which the binder can be burned off. The compacted preform may then be placed in a non-oxidizing (vacuum or inert gas) atmosphere furnace for the sintering operation, during which the powder particles of the base alloy and the second alloy undergo sintering to yield the pre-sintered preform 30 with good structural strength and low porosity. Suitable sintering temperatures may at least in part depend on the particular compositions of the particles of the base alloy and the second alloy. For example, in some embodiments, the sintering temperature may be in a range of about 1010°C to about 1280°C. In some embodiments, following sintering, the pre-sintered preform 30can be HIPed or vacuum pressed to achieve densities greater than 95%.

In some embodiments, the pre-sintered preform 30 may actually comprise a plurality of layers, each being attached to each other before or after being connected to the base article 20. In such embodiments, the plurality of layers may combine to form the near-surface cooling microchannel 32 or a single layer may comprise the near-surface cooling microchannel 32 while additional layers are present for additional protection of the base article 20. Such embodiments may also allow for specific thermal properties in different zones of the pre-sintered preform 30 to be individually tailored. In even some embodiments, the pre-sintered preform 30 may be combined with one or more metal layers or sections. For example, the pre-sintered preform 30 may form the sides of the near-surface cooling microchannel 32 while a thin metal film closes off the top of the near-surface microchannel 32. In such embodiments, the metal film may be bonded prior to, after or while the pre-sintered preform 30 is bonded to the base article 20. Or, in some embodiments, the pre-sintered preform 30 may bond with the base article 20 via one or more additional metal layers.

The near-surface cooling microchannel 32 can be formed into the first surface 36 of the pre-sintered preform 30 using a variety of methods and at a variety of times in the manufacturing of the pre-sintered preform 30. For example, in some embodiments, the pre-sintered preform 30 may be sintered into a base shape so that the near-surface cooling microchannel 32 can be subsequently machined into the base shape. Such machining (i.e., the removal of some material from the pre-sintered preform 30) can occur via any suitable material removal operation including, but not limited to, milling, grinding, wire electrical discharge machining (EDM), milled EDM, plunge EDM, electro-chemical machining (ECM), waterjet trenching, laser trenching, or combinations thereof. In other embodiments, the pre-sintered preform 30 may be cast such that the near-surface cooling microchannel 32 is present when the pre-sintered preform 30 is still in its pliable green state before its initial sintering.

Referring specifically to FIG. 3, in some embodiments the component 10 may have at least one additional coating 40 on an exterior surface (opposite the first surface 36) of the pre-sintered preform 30. The coating 40 can comprise any type of coating that may be suitable for component 10 when in operation such as those that assist in thermal, mechanical, or other performance. For example, in some embodiments, such as when the component 10 comprises a hot gas path component for a turbine, the coating 40 can comprise a thermal barrier coating and/or an environmental barrier coating. Exemplary, but non-limiting coatings 40 include one or more bond coats, transition or intermediate layers, and/or topcoats. Non-limiting materials for the coatings 40 include ceramic materials, a notable example of which is zirconia partially or fully stabilized with yttria (YSZ) or another oxide such as magnesia, ceria, scandia and/or calcia, and optionally other oxides to reduce thermal conductivity. Bond coat materials used in thermal barrier coating systems include oxidation-resistant overlay coatings such as MCrAlX (where M is iron, cobalt and/or nickel, and X is yttrium, a rare-earth metal, and/or another reactive metal), and oxidation-resistant diffusion coatings.

The coating 40 can be deposited to a thickness that is sufficient to provide a desired level of thermal protection for the underlying surface region such as, for example, on the order of about 75 to about 300 micrometers, though lesser and greater thicknesses are also possible. The coating 40 can be applied to the pre-sintered preform 30 prior to bonding the pre-sintered preform 30 to the base article 20, after bonding the pre-sintered preform 30 to the base article 20, or combinations thereof.

Referring to FIGS. 2 and 3, the first surface 36 of the pre-sintered preform 30 is disposed on the outer surface 26 of the base article 20 such that the opening 24 of the outer surface 26 of the base article is aligned with the near-surface cooling microchannel 32 in the first surface 36 of the pre-sintered preform 30. The alignment between the near-surface cooling microchannel 32 and the opening 24 can allow cooling air to flow between the internal cooling passage 18 and the near-surface cooling microchannel 32.

The pre-sintered preform 30 is bonded to the base article 20 by heating the pre-sintered preform 30, such as within a non-oxidizing (vacuum or inert gas) atmosphere, to a temperature capable of melting the particles comprising the second alloy (i.e., the lower melting particles) of the pre-sintered preform 30, such as within a range of about 2050°F to about 2336°F (about 1120°C to about 1280°C) (depending on composition) for a period of about 10 to about 60 minutes. The second alloy particles can then melt and wet the particles of the base alloy and the outer surface 26 of the base article 20 thereby creating a two-phase mixture that alloys together. Additionally, by using the combination of the base alloy and the second alloy, the pre-sintered preform 30 may not significantly close, if at all, either the opening 24 in the outer surface 26 of the base article, or the near-surface cooling microchannel 32 in the first surface 36 of the pre-sintered preform 30, or any exit passage(s) out of the near-surface cooling microchannel 32. It should also be appreciated that any type of heating may be utilized such as, but not limited to induction heating, torches, ovens or any other source to sufficiently bond the materials. In even some embodiments, the heating may be achieved through friction welding such that the heating process is more localized to the surface regions.

In some embodiments, a small amount of additional low melt constituent material can be placed between the pre-sintered preform 30 and the base article 20 to increase brazement quality. Thereafter, the base article 20 and the pre-sintered preform 30 are cooled below the solidus temperature of the pre-sintered preform 30 to solidify the mixture and form the superalloy brazement. The brazement can then undergo a heat treatment at a temperature of about 1975°F to about 2100°F (about 1080°C to about 1150°C) for a duration of about thirty minutes to about four hours to further interdiffuse the particles of the base alloy and the second alloy as well as the alloy of the base article 20. After heat treatment, any excess material in the brazement can be removed by grinding or any other suitable method.

In some embodiments, a filler material (not illustrated) may temporarily be disposed in the internal cooling passage 18 prior to bonding the pre-sintered preform 30 to the base article 20 to ensure the internal cooling passage 18 does not clog. Such filler material may be disposed through any suitable means and comprise any suitable material for temporarily stopping-off the internal cooling passage 18. For example, the filler material may comprise a material that does not melt when the pre-sintered preform 30 is bonded to the base article 20, but that can subsequently be removed via additional heating at a higher temperature, the application of select chemicals or any other suitable method. Such embodiments may be particularly suitable for smaller internal cooling passages 18 such as those with a diameter of 0.03 inches (0.762 millimeters) or less.

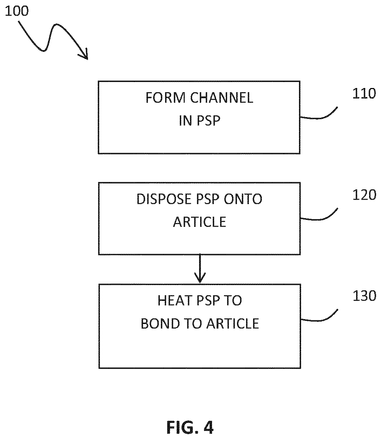

Referring now to FIGS. 2-4, an exemplary method 100 (FIG. 4) is illustrated for providing a near-surface cooling microchannel 32 in a component 10. The method first comprises forming the near-surface cooling microchannel 32 in the first surface 36 of the pre-sintered preform 30 in step 110. As discussed above, the near-surface cooling microchannel 32 can be machined into an already sintered pre-sintered preform 30 or cast into the pre-sintered preform 30 when it is still in its pliable green state.

The method 100 further comprises disposing the first surface 36 of the pre-sintered preform 30 onto the outer surface 26 of the base article 20 in step 120. Specifically, the pre-sintered preform 30 is disposed such that the opening 24 of the outer surface 26 of the base article 20 is aligned with the near-surface cooling microchannel 32 in the first surface 36 of the pre-sintered preform 30. Finally, the method comprises heating the pre-sintered preform 30 to bond it to the base article 20 in step 130. The bonding occurs such that the opening 24 of the outer surface 26 of the base article 20 remains aligned with the near-surface cooling microchannel 32 in the first surface 36 of the pre-sintered preform 30. As discussed above, heating can occur for any temperature or range of temperatures and for any time to sufficiently bond the pre-sintered preform 30 to the base article 20. Furthermore, bonding in step 130 can be achieved through any suitable means such as heating the pre-sintered preform through induction heating, friction welding or the like.

It should now be appreciated that a near-surface cooling microchannel 32 can be formed into components by first manufacturing them into a pre-sintered preform and then bonding the pre-sintered preform to a base article. The internal cooling passage of the base article can thereby connect to the near-surface cooling microchannel to allow there passage of cooling air to flow there between. By manufacturing the near-surface cooling microchannel into the pre-sintered preform, the manufacturing difficulty of machining such small channels into the tough component material may be relieved. Moreover, by using pre-sintered preforms, the bonding of the pre-sintered preform to the base article will not significantly, if at all, close either the opening of the near-surface cooling microchannel.

## Claims

1. A method (100) of providing a near-surface cooling microchannel having a width and depth, parallel and normal to the first surface 36, respectively, of up to 2.5mm in a component (10), the component (10) comprising an internal cooling passage (18) within a base article (20) having an opening (24) at an outer surface (26), the method comprising:
forming (110) a near-surface cooling microchannel (32) in a first surface (36) of a pre-sintered preform (30), wherein the pre-sintered preform comprises a mixture comprising a base alloy and a second alloy, the base alloy having a composition similar to the base article (20) and having a melting point of within 25°C of the melting temperature of the base article (20), the second alloy having a composition similar to the base article (20) but further comprising a melting point depressant comprising one of boron, silicon or a combination thereof, wherein the base alloy comprises 30 weight percent to 90 weight percent of the mixture and the second alloy comprising a sufficient amount of the melting point depressant to have a lower melting temperature than the base alloy and to enable bonding of the pre-sintered preform (30) to the base article (20) at temperatures below the melting point of the base article (20);
disposing (120) the first surface (36) of the pre-sintered preform (30) onto the outer surface (26) of the base article (20) such that the opening (24) of the outer surface (26) of the base article (20) is aligned with the near-surface cooling microchannel (32) in the first surface (36) of the pre-sintered preform (30); and,
heating (130) the pre-sintered preform (30) to bond it to the base article (20), wherein the opening (24) of the outer surface (26) of the base article (20) remains aligned with the near-surface cooling microchannel (32) in the first surface (36) of the pre-sintered preform (30).

2. The method of claim 1, further comprising forming a second near-surface cooling microchannel in the first surface (36) of the pre-sintered preform (30), wherein when the pre-sintered preform (30) is disposed on the outer surface (26) of the base article (20), the second near-surface (26) cooling microchannel aligns with a second opening in the outer surface (26) of the base article (20).

3. The method of claim 1 or 2, wherein the pre-sintered preform (30) is formed by combining base alloy particles and second alloy particles with a binder to form a combined powder mixture, compacting the combined powder mixture to form a compacted preform, and heating the compacted preform to remove the binder and form the pre-sintered preform (30).

4. The method of claim 3, wherein the near-surface cooling microchannel (32) is formed into the compacted preform prior to heating.

5. The method of any of claims 1 to 3 claim, wherein the pre-sintered preform (30) has a density of at least 90% of theoretical.

6. The method of any preceding claim, wherein the base alloy and second alloy are mixed together at a weight ratio of 30:70 to 90:10, respectively.

7. The method of any preceding claim, further comprising depositing a coating (40) on an exterior surface of the pre-sintered preform (30), wherein the exterior surface is opposite the first surface (36).

8. The method of claim 7, wherein the coating (40) is deposited on the pre-sintered preform (30) before the pre-sintered preform (30) is bonded to the base article.

9. The method of any preceding claim, further comprising:
disposing a filler material in the internal cooling passage (18) prior to heating the pre-sintered preform (30); and,
removing the filler material from the internal cooling passage (18) after heating the pre-sintered preform (30).

10. The method of any preceding claim, wherein the pre-sintered preform (30) is bonded to the outer surface (26) of the base article (20) without filling the opening (24).

11. A component comprising:
a base article (20) comprising an internal cooling passage (18) having an opening (24) at an outer surface (26); and,
a pre-sintered preform (30) having a first surface (36) bonded to the outer surface (26) of the base article (20), wherein the pre-sintered preform (30) comprises a near-surface cooling microchannel (32) in the first surface (36), having a width and depth, parallel and normal to the first surface 36, respectively, of up to 2.5mm, aligned with the opening (24) of the outer surface (26) of the base article (20), and wherein the pre-sintered preform (30) comprises a mixture comprising a base alloy and a second alloy, the base alloy having a composition similar to the base article (20) and having a melting point of within 25°C of the melting temperature of the base article (20), the second alloy having a composition similar to the base article (20) but further comprising a melting point depressant comprising one of boron, silicon or a combination thereof, wherein the base alloy comprises 30 weight percent to 90 weight percent of the mixture and the second alloy comprising a sufficient amount of the melting point depressant to have a lower melting temperature than the base alloy and to enable the bonding of the pre-sintered preform (30) to the base article (20) at temperatures below the melting point of the base article (20).

12. The component of claim 11, wherein the base article (20) comprises a second opening at the outer surface, and wherein the pre-sintered preform (30) comprises a second near-surface cooling microchannel (32) aligned with the second opening.

13. The component of any of claims 11 or 12, wherein the pre-sintered preform (30) has a density of at least 90% of theoretical.

## Patentansprüche

1. Verfahren (100) zum Bereitstellen eines oberflächennahen Kühlmikrokanals mit einer Breite und Tiefe, jeweils parallel bzw. normal zur ersten Oberfläche (36), von bis zu 2,5 mm in einer Komponente (10), wobei die Komponente (10) einen internen Kühldurchgang (18) innerhalb eines Grundkörpers (20) mit einer Öffnung (24) an einer Außenoberfläche (26) umfasst, wobei das Verfahren Folgendes umfasst:
Bilden (110) eines oberflächennahen Kühlmikrokanals (32) in einer ersten Oberfläche (36) einer vorgesinterten Vorform (30), wobei die vorgesinterte Vorform eine Mischung umfasst, die eine Basislegierung und eine zweite Legierung umfasst, wobei die Basislegierung eine ähnliche Zusammensetzung wie der Grundkörper (20) aufweist und einen Schmelzpunkt von innerhalb 25 °C gegenüber der Schmelztemperatur des Grundkörpers (20) aufweist, wobei die zweite Legierung eine ähnliche Zusammensetzung wie der Grundkörper (20) aufweist, aber ferner ein Schmelzpunktsenkungsmittel umfasst, das eines von Bor, Silizium oder eine Kombination davon umfasst, wobei die Basislegierung 30 Gewichtsprozent bis 90 Gewichtsprozent der Mischung umfasst und die zweite Legierung eine ausreichende Menge des Schmelzpunktsenkers umfasst, um eine niedrigere Schmelztemperatur als die Basislegierung aufzuweisen und ein Verbinden der vorgesinterten Vorform (30) mit dem Grundkörper (20) bei Temperaturen unterhalb des Schmelzpunkts des Grundkörpers (20) zu ermöglichen;
Anordnen (120) der ersten Oberfläche (36) der vorgesinterten Vorform (30) auf der Außenoberfläche (26) des Grundkörpers (20), sodass die Öffnung (24) der Außenoberfläche (26) des Grundkörpers (20) mit dem oberflächennahen Kühlmikrokanal (32) in der ersten Oberfläche (36) der vorgesinterten Vorform (30) ausgerichtet ist; und
Erwärmen (130) der vorgesinterten Vorform (30), um sie mit dem Grundkörper (20) zu verbinden, wobei die Öffnung (24) der Außenoberfläche (26) des Grundkörpers (20) mit dem oberflächennahen Kühlmikrokanal (32) in der ersten Oberfläche (36) der vorgesinterten Vorform (30) ausgerichtet bleibt.

2. Verfahren nach Anspruch 1, ferner umfassend das Bilden eines zweiten oberflächennahen Kühlmikrokanals in der ersten Oberfläche (36) der vorgesinterten Vorform (30), wobei, wenn die vorgesinterte Vorform (30) auf der Außenoberfläche (26) des Grundkörpers (20) angeordnet ist, der zweite oberflächennahe (26) Kühlmikrokanal mit einer zweiten Öffnung in der Außenoberfläche (26) des Grundkörpers (20) ausgerichtet ist.

3. Verfahren nach Anspruch 1 oder 2, wobei die vorgesinterte Vorform (30) durch Folgendes gebildet wird: Kombinieren von Partikeln der Basislegierung und Partikeln der zweiten Legierung mit einem Bindemittel, um eine kombinierte Pulvermischung zu bilden, Verdichten der kombinierten Pulvermischung, um eine verdichtete Vorform zu bilden, und Erwärmen der verdichteten Vorform, um das Bindemittel zu entfernen und die vorgesinterte Vorform (30) zu bilden.

4. Verfahren nach Anspruch 3, wobei der oberflächennahe Kühlmikrokanal (32) vor dem Erwärmen zu der verdichteten Vorform geformt wird.

5. Verfahren nach einem der Ansprüche 1 bis 3, wobei die vorgesinterte Vorform (30) eine Dichte von mindestens 90 % der theoretischen Dichte aufweist.

6. Verfahren nach einem der vorstehenden Ansprüche, wobei die Basislegierung und die zweite Legierung jeweils in einem Gewichtsverhältnis von 30:70 bis 90:10 miteinander gemischt werden.

7. Verfahren nach einem der vorstehenden Ansprüche, ferner umfassend das Aufbringen einer Beschichtung (40) auf einer Außenfläche der vorgesinterten Vorform (30), wobei die Außenfläche der ersten Fläche (36) gegenüberliegt.

8. Verfahren nach Anspruch 7, wobei die Beschichtung (40) auf die vorgesinterte Vorform (30) aufgebracht wird, bevor die vorgesinterte Vorform (30) mit dem Grundkörper verbunden wird.

9. Verfahren nach einem der vorstehenden Ansprüche, ferner umfassend:
Anordnen eines Füllmaterials in dem internen Kühlkanal (18) vordem Erwärmen der vorgesinterten Vorform (30); und
Entfernen des Füllmaterials aus dem internen Kühlkanal (18) nach dem Erwärmen der vorgesinterten Vorform (30).

10. Verfahren nach einem der vorstehenden Ansprüche, wobei die vorgesinterte Vorform (30) mit der Außenfläche (26) des Grundkörpers (20) verbunden wird, ohne die Öffnung (24) zu füllen.

11. Komponente, umfassend:
einen Grundkörper (20), umfassend einen internen Kühlkanal (18) mit einer Öffnung (24) an einer Außenoberfläche (26); und
eine vorgesinterte Vorform (30) mit einer ersten Oberfläche (36), die mit der Außenoberfläche (26) des Grundkörpers (20) verbunden ist, wobei die vorgesinterte Vorform (30) einen oberflächennahen Kühlmikrokanal (32) in der ersten Oberfläche (36) mit einer Breite und Tiefe, jeweils parallel bzw. normal zu der ersten Oberfläche (36), von bis zu 2,5 mm umfasst, die mit der Öffnung (24) der Außenoberfläche (26) des Grundkörpers (20) ausgerichtet ist, und wobei die vorgesinterte Vorform (30) eine Mischung umfasst, die eine Basislegierung und eine zweite Legierung umfasst, wobei die Basislegierung eine ähnliche Zusammensetzung wie der Grundkörper (20) aufweist und einen Schmelzpunkt von innerhalb 25 °C gegenüber der Schmelztemperatur des Grundkörpers (20) aufweist, wobei die zweite Legierung eine ähnliche Zusammensetzung wie der Grundkörper (20) aufweist, aber ferner ein Schmelzpunktsenkungsmittel umfasst, das eines von Bor, Silizium oder eine Kombination davon umfasst, wobei die Basislegierung 30 Gewichtsprozent bis 90 Gewichtsprozent der Mischung umfasst und die zweite Legierung eine ausreichende Menge des Schmelzpunktsenkers umfasst, um eine niedrigere Schmelztemperatur als die Basislegierung aufzuweisen und das Verbinden der vorgesinterten Vorform (30) mit dem Grundkörper (20) bei Temperaturen unterhalb des Schmelzpunkts des Grundkörpers (20) zu ermöglichen.

12. Komponente nach Anspruch 11, wobei der Grundkörper (20) eine zweite Öffnung an der Außenoberfläche umfasst, und wobei die vorgesinterte Vorform (30) einen zweiten oberflächennahen Kühlmikrokanal (32) umfasst, der mit der zweiten Öffnung ausgerichtet ist.

13. Komponente nach einem der Ansprüche 11 oder 12, wobei die vorgesinterte Vorform (30) eine Dichte von mindestens 90 % der theoretischen Dichte aufweist.

## Revendications

1. Procédé (100) de fourniture d'un microcanal de refroidissement pratiquement en surface ayant une largeur et une profondeur, parallèle et perpendiculaire à la première surface (36), respectivement, allant jusqu'à 2,5 mm dans un composant (10), le composant (10) comprenant un passage de refroidissement interne (18) au sein d'un article de base (20) ayant une ouverture (24) au niveau d'une surface externe (26), le procédé comprenant :
la formation (110) d'un microcanal de refroidissement pratiquement en surface (32) dans une première surface (36) d'une préforme préfrittée (30), dans lequel la préforme préfrittée comprend un mélange comprenant un alliage de base et un deuxième alliage, l'alliage de base ayant une composition similaire à l'article de base (20) et ayant un point de fusion à plus ou moins 25 °C de la température de fusion de l'article de base (20), le deuxième alliage ayant une composition similaire à l'article de base (20) mais comprenant en outre un agent d'abaissement de point de fusion comprenant l'un parmi du bore, du silicium ou une combinaison de ceux-ci, dans lequel l'alliage de base constitue 30 pour cent en poids à 90 pour cent en poids du mélange et le deuxième alliage comprenant une quantité suffisante de l'agent d'abaissement de point de fusion pour avoir une température de fusion plus basse que l'alliage de base et pour permettre une liaison de la préforme préfrittée (30) à l'article de base (20) à des températures en dessous du point de fusion de l'article de base (20) ;
la mise en place (120) de la première surface (36) de la préforme préfrittée (30) sur la surface externe (26) de l'article de base (20) de telle sorte que l'ouverture (24) de la surface externe (26) de l'article de base (20) est alignée avec le microcanal de refroidissement pratiquement en surface (32) dans la première surface (36) de la préforme préfrittée (30) ; et,
le chauffage (130) de la préforme préfrittée (30) pour la lier à l'article de base (20), dans lequel l'ouverture (24) de la surface externe (26) de l'article de base (20) reste alignée avec le microcanal de refroidissement pratiquement en surface (32) dans la première surface (36) de la préforme préfrittée (30).

2. Procédé selon la revendication 1, comprenant en outre la formation d'un deuxième microcanal de refroidissement pratiquement en surface dans la première surface (36) de la préforme préfrittée (30), dans lequel lorsque la préforme préfrittée (30) est disposée sur la surface externe (26) de l'article de base (20), le deuxième microcanal de refroidissement pratiquement en surface (26) s'aligne avec une deuxième ouverture dans la surface externe (26) de l'article de base (20).

3. Procédé selon la revendication 1 ou 2, dans lequel la préforme préfrittée (30) est formée en combinant des particules d'alliage de base et des deuxièmes particules d'alliage avec un liant pour former un mélange en poudre combiné, en compactant le mélange en poudre combiné pour former une préforme compactée, et en chauffant la préforme compactée pour éliminer le liant et former la préforme préfrittée (30).

4. Procédé selon la revendication 3, dans lequel le microcanal de refroidissement pratiquement en surface (32) est formé en la préforme compactée avant chauffage.

5. Procédé selon l'une quelconque des revendications 1 à la revendication 3, dans lequel la préforme préfrittée (30) a une masse volumique d'au moins 90 % de la valeur théorique.

6. Procédé selon une quelconque revendication précédente, dans lequel l'alliage de base et le deuxième alliage sont mélangés entre eux à un rapport pondéral de 30:70 à 90:10, respectivement.

7. Procédé selon une quelconque revendication précédente, comprenant en outre le dépôt d'un revêtement (40) sur une surface extérieure de la préforme préfrittée (30), dans lequel la surface extérieure est opposée à la première surface (36).

8. Procédé selon la revendication 7, dans lequel le revêtement (40) est déposé sur la préforme préfrittée (30) avant que la préforme préfrittée (30) soit liée à l'article de base.

9. Procédé selon une quelconque revendication précédente, comprenant en outre :
la mise en place d'un matériau de charge dans le passage de refroidissement interne (18) avant chauffage de la préforme préfrittée (30) ; et,
l'élimination du matériau de charge du passage de refroidissement interne (18) après chauffage de la préforme préfrittée (30).

10. Procédé selon une quelconque revendication précédente, dans lequel la préforme préfrittée (30) est liée à la surface externe (26) de l'article de base (20) sans remplir l'ouverture (24).

11. Composant comprenant :
un article de base (20) comprenant un passage de refroidissement interne (18) ayant une ouverture (24) au niveau d'une surface externe (26) ; et,
une préforme préfrittée (30) ayant une première surface (36) liée à la surface externe (26) de l'article de base (20), dans lequel la préforme préfrittée (30) comprend un microcanal de refroidissement pratiquement en surface (32) dans la première surface (36), ayant une largeur et une profondeur, parallèle et perpendiculaire à la première surface (36), respectivement, allant jusqu'à 2,5 mm, aligné avec l'ouverture (24) de la surface externe (26) de l'article de base (20), et dans lequel la préforme préfrittée (30) comprend un mélange comprenant un alliage de base et un deuxième alliage, l'alliage de base ayant une composition similaire à l'article de base (20) et ayant un point de fusion à plus ou moins 25 °C de la température de fusion de l'article de base (20), le deuxième alliage ayant une composition similaire à l'article de base (20) mais comprenant en outre un agent d'abaissement de point de fusion comprenant l'un parmi du bore, du silicium ou une combinaison de ceux-ci, dans lequel l'alliage de base constitue 30 pour cent en poids à 90 pour cent en poids du mélange et le deuxième alliage comprenant une quantité suffisante de l'agent d'abaissement de point de fusion pour avoir une température de fusion plus basse que l'alliage de base et pour permettre la liaison de la préforme préfrittée (30) à l'article de base (20) à des températures en dessous du point de fusion de l'article de base (20).

12. Composant selon la revendication 11, dans lequel l'article de base (20) comprend une deuxième ouverture au niveau de la surface externe, et dans lequel la préforme préfrittée (30) comprend un deuxième microcanal de refroidissement pratiquement en surface (32) aligné avec la deuxième ouverture.

13. Composant selon l'une quelconque des revendications 11 ou 12, dans lequel la préforme préfrittée (30) a une masse volumique d'au moins 90 % de la valeur théorique.
